Europäisches Patentamt

**European Patent Office**

**Office européen des brevets**

(11) Veröffentlichungsnummer : **0 000 780 B2**

(12) **NEUE EUROPÄISCHE PATENTSCHRIFT**

(45) Veröffentlichungstag der neuen Patentschrift :
**10.09.86**

(21) Anmeldenummer : **78100610.1**

(22) Anmeldetag : **07.08.78**

(51) Int. Cl.⁴ : **C 09 D   3/50, C 08 K   5/16, C 08 L  61/20**

(54) **Verwendung einer wässrigen Lösung eines schwefligsauren Salzes von primären, sekundären oder tertiären aliphatischen oder cycloaliphatischen Alkanolaminen bzw. des Morpholins als latenter Härter für Aminoplastharze.**

(30) Priorität : **12.08.77 DE 2736404**

(43) Veröffentlichungstag der Anmeldung :
**21.02.79 Patentblatt 79/04**

(45) Bekanntmachung des Hinweises auf die Patenterteilung : **30.09.81 Patentblatt 81/39**

(45) Bekanntmachung des Hinweises auf die Entscheidung über den Einspruch : **10.09.86 Patentblatt 86/37**

(84) Benannte Vertragsstaaten :
**BE CH DE FR SE**

(56) Entgegenhaltungen :
**BE-A-   511 112**
**DE-B- 1 694 333**
**DE-B- 1 936 789**
**GB-A-   697 479**
**GB-A-   937 606**
**GB-A- 1 049 511**
**US-A- 2 223 817**
**US-A- 2 326 727**
**Chemisches Zentralblatt 1939 I Halbjahr Nr. 20 S. 4005-4006**
**Gmelins Handbuch der Anorganischen Chemie, 8. Auflage Teil A Lieferung 2, S. 316 u. Teil B, Lieferung 2, S. 597**
**Scheiber, Chemie und Technologie der künstlichen Harze, (1943), S. 346**
**Zeitschrift für die ges. Textil-Industrie 66, Heft 2, S. 133 u. 134 (1964)**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Duda, Ulrich-Michael, Dr.**
**Amsterdamer Strasse 16**
**D-6700 Ludwigshafen (DE)**
Erfinder : **Lelgemann, Ludwig**
**Amsterdamer Strasse 16**
**D-6700 Ludwigshafen (DE)**
Erfinder : **Pfalzgraf, Walter**
**Karl-Marx-Strasse 23**
**D-6704 Mutterstadt (DE)**
Erfinder : **Weiss, Wolfram, Dr.**
**Bruesseler Ring 53**
**D-6700 Ludwigshafen (DE)**

EP 0 000 780 B2

0 000 780

**Beschreibung**

Zur Beschleunigung der Härtungsreaktion von Aminoplastharzen sind bereits zahlreiche Katalysatoren bekannt. Sie werden in geringen Mengen den Harzen zugesetzt. Man unter scheidet zwischen unmittelbar wirksamen Katalysatoren (in der Regel Säuren) und sogenannten latenten Katalysatoren.

Die Wirkung der latenten Härtungskatalysatoren beruht darauf, daß sie bei gewöhnlicher Temperatur unwirksam sind und erst in der Wärme oder aufgrund einer chemischen Reaktion eine Säure freisetzen, die den Härtungsvorgang beschleunigt. Typische derartige Härtungskatalysatoren sind z. B. Ammoniumsalze.

Sowohl bei der Verwendung von Aminoplastharzen z. B. auf dem Gebiet der Holzverleimung, wo die Aushärtung relativ unkritisch ist, als auch insbesondere bei der Anwendung auf dem Gebiet der Oberflächenbeschichtung sind eine Vielzahl von Problemen zu lösen und Anforderungen an die Harze bzw. ihre Lösungen zu stellen.

Die bei der Oberflächenbeschichtung üblichen Imprägnierharzlösungen bzw. die daraus hergestellten sogenannten Harzflotten dienen zum Tränken von saugfähigen Trägermaterialien, z. B. Papier, Vliesstoff oder Gewebe ; nach dem Trocknen können die imprägnierten Trägerstoffe durch Heißpressen zu Laminaten verarbeitet werden oder zur Oberflächenbeschichtung von Werkstoffen, z. B. Span- oder Tischlerplatten dienen.

Die Aushärtung der Aminoplastharze geschieht gewöhnlich unter Druck und Hitze. In verarbeitungstechnischer und wirtschaftlicher Hinsicht und im Hinblick auf die wünschenswerten Eigenschaften der erzielten Beschichtung müssen dabei an die Härtungskatalysatoren eine Reihe von Anforderungen gestellt werden, die diese normalerweise nicht immer und zu gleicher Zeit in dem geforderten Maße erfüllen.

Ein gutes Härtungsmittel soll z. B. folgende Bedingungen erfüllen :

1. Bei Raumtemperatur oder geringfügig erhöhter Temperatur soll es möglichst keine härtungsbeschleunigende Wirkung entfalten, um die Lagerfähigkeit des Produktes und damit die Gebrauchsdauer der Imprägnierflotte nicht ungünstig zu beeinflussen.

2. Erst bei der Verarbeitungstemperatur soll die beschleunigende Wirkung eintreten. Die Verarbeitungstemperatur ist jedoch kritisch, weil hierbei zwischen plastischem Verlauf (Schmelzfluß) und Reaktivität ein Zusammenspiel erforderlich ist, um eine geschlossene, porenfreie Oberfläche beim Verpressen zu erzielen.

3. Der Härter darf die Eigenschaften des Fertigproduktes nicht nachteilig, z. B. durch Überhärtungserscheinungen wie Versprödung und Rißbildung beeinflussen.

4. Der Härter soll weiterhin das Reaktivitätsverhalten unter Druck und Hitze so günstig beeinflussen, daß die erzielbaren guten Gebrauchseigenschaften des fertigen Werkstoffs in wirtschaftlicher Zeit, z. B. in Preßzeiten von weniger als einer Minute, erreicht werden.

Die Mindestanforderungen an eine moderne gebrauchsfähige Beschichtung gehen dahin, daß der fertige Werkstoff gegenüber Säuren und Wasserdampft beständig ist, porenfreie Oberfläche besitzt und damit gegen Schmutz unempfindlich ist und unter späterer Temperaturbelastung rißfrei bleibt. Die Oberfläche soll ruhig wirken und einem möglichst hohen Glanzgrad auch bei Entformung in der Wärme (ohne Rückkühlung) aufweisen.

Günstige verarbeitungstechnische Eigenschaften eines Harzes bedeuten, daß die mit Härter versehene Imprägnierlösung mehrere Tage gebrauchsfähig bleibt, die zur Einstellung des erforderlichen Vorkondensationsgrades benötigte Wärmemenge möglichst gering ist und außerdem die Preßwerkzeuge von den Harzbestandteilen chemisch möglichst wenig angegriffen werden. Dies gilt besonders für die Bestandteile des Härters, die in der Wärme — wie erwähnt — saure Eigenschaften entwickeln. Selbstverständlich ist, daß das Werkstück nach der Herstellung leicht aus dem Werkzeug entnommen werden kann, also nicht anhaftet.

Mit den herkömmlichen Härtern ist es im allgemeinen sehr schwierig, die vorab geschilderten Anforderungen zu erfüllen und die angestrebten Gebrauchseigenschaften des fertigen Werkstoffs zu erreichen, da sich einige Anforderungen zu widersprechen scheinen. Spannungsrißbeständigkeit wird durch flexible elastifizierte Aminoplastharze erreicht, während Glanz, Härte und Abriebfestigkeit einer Oberfläche eine gewisse Sprödigkeit voraussetzen. Ferner kommt es bei einer zu stark ausgehärteten Oberfläche bevorzugt zur Porenbildung, da der Schmelzfluß unter Druck und Hitze bei einer hochreaktiv eingestellten Imprägnierlösung nur sehr schwer steuerbar ist. Außerdem ist das Latenzverhalten der herkömmlichen Härter, wenn man kürzeste Aushärtungszeit in der Presse anstrebt, derart, daß die entsprechend eingestellten Imprägnierlösungen bei Raumtemperatur nur einige Stunden gebrauchsfähig bleiben.

Überraschenderweise wurde nun gefunden, daß wäßrige Lösungen von Salzen von schwefliger Säure mit primären, sekundären oder tertiären aliphatischen oder cycloaliphatischen Alkanolaminen bzw. des Morpholins besonders günstige Eigenschaften als latente Härter für Aminoplastharze aufweisen. Bevorzugte Alkanolamine weisen 1 bis 10 Kohlenstoffatome auf.

Als Aminoplastharze im Sinne der Erfindung sind sowohl Harnstoff- als Melamin-Formaldehydharze zu verstehen.

Gewöhnlich liegen sie als wäßrige Lösungen von Harnstoff-Formaldehyd-Kondensaten mit einem

2

**0 000 780**

Molverhältnis (F : H) von 1.4 : 1 bis 1.7 : 1 oder Melamin-Formaldehyd-Kondensaten mit einem Molverhältnis (F : M) von 1.5 : 1 bis 2 : 1 vor, die bis oder fast bis zur beginnenden Wasserunverträglichkeit kondensiert sind. Auch verätherte oder teilverätherte (voll wasserlösliche) Kondensate und auch die Verwendung nichtwäßriger Lösungsmittel sind üblich.

Man verwendet z. B. Harnstoff-Melamin- oder Mischkondensate für Zwecke wie Holzverleimung oder Preßmassen ; Harnstoffharze sind üblich zum Tränken sogenannter Grundierfolien, um Holzwerkstoffe lackierbar zu machen. Harnstoffharze vorzugsweise jedoch Melamin-Formaldehyd-Kondensationsprodukte, dienen zur Beschichtung von Holzwerkstoffen mit harzimprägnierten Papieren in kurzen Preßzeiten.

Es ist an sich bekannt, daß sich Salze von gewissen Aminen mit starken anorganischen Säuren oder auch mit starken Carbonsäuren als latente Härter für Aminoplaste eignen. Während dies in der GB-PS 697 479 vorzugsweise für Textilhilfsmittel beschrieben ist, schlägt die DE-AS 1 694 333 die Verwendung von Acetat bzw. Oxalat des N-Methyläthanolamins als latente Härter für Tränkharze (Imprägnierharze) vor.

Die Nachprüfung dieser Vorschläge hat ergeben, daß die GB-PS keine für die Anwendung auf Tränkharze geeignete Lehre vermittelt. Viele Mineralsäuren — z. B. Chlorwasserstoffsäure oder Schwefelsäure — kommen schon wegen ihrer Agressivität gegenüber den Preßwerkzeugen für das vorliegende Arbeitsgebiet nicht in Betracht.

Die aus der DE-AS bekannten Härter wiederum sind nicht grundsätzlich vorteilhafter als schon gebräuchliche Härter, wie z. B. Morpholinsalze.

Härter auf der Grundlage von Salzen bestimmter Alkyl-bzw. Alkanolamine schlägt auch die GB-PS 1 049 511 vor, wobei als Säurepartner bevorzugt Salzsäure und allgemein Sulfonsäuren, Schwefelsäure und eine Reihe Carbonsäuren angegeben werden.

Die GB-PS 937 606 enhält die Lehre, Additionsprodukte von u. a. Schwefeldioxid an Amine, die in wasserfreier Umsetzung hergestellt sind, als Härter für Harnstoffharze zu verwenden. Diese Additionsprodukte sind jedoch nicht als Salze anzusehen und sind in wäßriger Lösung bei Raumtemperatur in der Regel unlöslich (vgl. Beispiel 1 der GB-PS) ; auch konnte festgestellt werden, daß Aminoplastlösungen, denen solche Addukte zugesetzt werden, nicht stabil sind ; insbesondere gilt dies für die Addukte mit den Alkanolaminen, die nach der Erfindung verwendet werden. Aus dieser Feststellung kann man schließen, daß die Addukte nach der GB-PS in wäßriger Umgebung jedenfalls unter gewöhnlichen Bedingungen nicht in die entsprechenden Salze übergehen.

Schließlich ist aus der US-PS 2 223 817 noch bekannt geworden, u. a. das molare Salz von schwefliger Säure und Äthylendiamin als latenten Härter zu verwenden. Abgesehen davon, daß dieser latente Härter in Wasser ebenfalls schwerlöslich ist und somit in wäßrigen Aminoplastlösungen nicht homogen verteilt werden kann, besitzt er auch nicht die gleichmäßig härtende Wirkung der erfindungsgemäßen Alkanolamin- bzw. Morpholin-Salze. Dies hängt wahrscheinlich damit zusammen, daß Äthylendiamin eine im Vergleich zu Alkanolaminen und den entsprechenden ringförmigen Morpholinen wesentlich stärkere Base darstellt und mit dem Formaldehyd der Aminoplastharze auch leicht reagiert.

Aus einer Vielzahl möglicher Kombinationspartner für Alkanolamine hat sich schweflige Säure als nahezu ideal erwiesen. Als Alkanolamine werden bevorzugt N-Methyläthanolamin, N,N-Dimethyläthanolamin, Mono-, Di- und Triäthanolamin sowie Morpholin und 4-(2-Hydroxyäthyl)-morpholin, die wegen ihrer ähnlichen Struktur und geringen Basizität als Äquivalente von Alkanolaminen anzusehen sind, allein oder in Mischung zur Herstellung von schwefligsauren Ammoniumsalzen verwendet.

Die erfindungsgemäßen Härter werden den Harzen bzw. ihren Lösungen in üblichen mengen, z. B. 0,1 bis 20 Gewichtsprozent, bezogen auf den Feststoffanteil der Harzlösungen, zugesetzt. Dies kann mehr oder minder kurz vor der Verarbeitung geschehen ; im allgemeinen sind die Lösungen wenigstens einige Stunden, meistens mehrere Tage haltbar. Es kann je nach gewünschtem Glanzgrad die Härterdosierung der Preßzeit angepaßt werden, wobei gegenüber den üblichen Härtern verbesserte Gebrauchseigenschaften des fertigen Werkstoffs erhalten werden.

Die mit den Lösungen hergestellten, noch nicht ausgehärteten Produkte, also z. B. vorgetrocknete, harzgetränkte Papiere sind im allgemeinen mehrere Wochen oder Monate Haltbar.

Als günstige Anwendungsform der erfindungsgemäßen Härter haben sich sowohl saure als auch neutrale Sulfite als auch deren Mischungen erwiesen. Das Verhältnis von schwefliger Säure zu Alkanolamin bzw. -amingemisch liegt daher in den erfindungsgemäßen Zubereitungen in der Regel zwischen 0,5 : 1 bis 1 : 1.

In diesem Zusammenhang ist übrigens zu erwähnen, daß nach dem Vorschlag der GB-PS 697 479 das freie Amin wenigstens in einem Überschuß von 5 Molprozent, bezogen auf das Salz, vorliegen soll. Dieser Überschuß soll je nach Säurepartner bis 300 Molprozent betragen und wird als wesentlich beschrieben, um verarbeitbare Imprägnierlösungen mit einer Gebrauchsdauer von bestenfalls 16 Stunden zu erhalten.

Die erfindungsgemäß zu verwendenden Härter zeichnen sich demgegenüber dadurch aus, daß sie — auch in Mengen, die für eine Kurztaktbeschichtung in besonders kurzen Preßzeiten notwendig sind — die Gebrauchsfähigkeit der Harzflotte wesentlich länger erhalten, als dies mit herkömmlichen Härtern, wie reinen Säuren oder mineralsauren Aminsalzen oder Aminsalzen starker aliphatischer oder aromatischer Carbonsäuren möglich ist.

3

Bei der Verpressung der aminoplastharzgetränkten Trägerbahnen z. B. auf Holzwerkstoffplatten oder mit Schichtstoffen kann die Preßzeit im sogenannten Kurztaktverfahren auf unter eine Minute verringert werden, wobei gegenüber den mit üblichen Härtungsmitteln eingestellten Imprägnier lösungen wesentlich geschlossenere, besser gehärtete, wasserdampfbeständigere und glänzendere Oberflächen erhalten werden. Die Oberflächen bleiben auch bei späterer Temperatureinwirkung vollkommen rißfrei.

## Beispiele 1 bis 6

Die Lösung eines in üblicher Weise hergestellten Melaminharzes im Molverhältnis von Formaldehyd zu Melamin von 1,7 : 1 mit einem Trockengehalt (2 h/120 °C) von 55 % und einer Wasserverdünnbarkeit von 1 : 1,3 wird in Proben aufgeteilt und jeweils mit verschiedenen Härtern in Form ihrer ca. 50 %igen Lösungen auf eine Gelierzeit (140 °C im Druckrohr) von 60 bis 70 Sekunden eingestellt. Ein weißes, pigmentiertes, saugfähiges Edelzellstoffpapier mit einem Flächengewicht von 110 g/m$^2$ wird mit dieser Harzlösung so imprägniert, daß die Trägerbahn ein Flächengewicht von 270 g/m$^2$ und einen Darrwert von 6,4 bis 7,0 % aufweist.

Die Preßbedingungen bei den Parallelversuchen liegen bei a) 6 min/145 °C, b) 3 min/170 °C), c) 60 sek/190 °C mit Zulagepolster (die angegebene Temperatur ist stets die Temperatur der Preßbleche).

Geprüft wurden folgende Eigenschaften des fertigen Werkstoffs :

### 1. Aushärtung

Man läßt eine mit Rhodamin B angefärbte 0,2 n Salzsäure 15 Stunden auf die Oberfläche einwirken. Beurteilt werden Säureangriff und Farbstoffaufzug in einer Werteskala von 0 bis 6, wobei « kein erkennbarer Angriff » den Wert O erhält.

### 2. Geschlossenheit

Die zu prüfende Oberfläche wird mit schwarzer Schuhcreme behandelt und mit einem sauberen Tuch wieder abgerieben. In einer Werteskala von 0 bis 6 wird beurteilt, ob sich der Farbstoff vollkommen entfernen läßt (O) oder in offenen Poren mehr oder weniger zurückbleibt (> 0).

### 3. Rißbeständigkeit

Die mit der doppelt aufgelegten Folie 6 min bei 170 °C beschichteten Spanplatten werden 16 Stunden bei 100 °C gelagert. Anschließend wird die Oberfläche auf Risse beurteilt (Werteskala 0 bis 6).

(Siehe Tabelle 1 Seite 5 f.)

**0 000 780**

Tabelle 1

Prüfergebnisse der anwendungstechnischen Untersuchungen an Melaminharzen, gehärtet mit bekannten und erfindungsgemäßen Härtern

| Beispiel | Härter (in Klammern angegeben: Molverhältnis) | Aushärtung bei Preßbedingung | | | Geschlossenheit bei Preßbedingung | | | Rißbeständigkeit |
|---|---|---|---|---|---|---|---|---|
| | | a | b | c | a | b | c | |
| | Ammoniumsalz der p-Toluolsulfonsäure (Vergleichshärter) | 1 | 1 | 1 | 3 | 3 | 3 | 5—6 |
| 1 | Äthanolamin/ $H_2SO_3$ (1:0,6) | 1 | 0—1 | 2 | 1 | 2 | 2—3 | 2 |
| 2 | Dimethyläthanolamin/$H_2SO_3$ (1:0,7) | 2—3 | 2 | 3 | 3 | 3 | 3 | 0 |
| 3 | Triäthanolamin/ $H_2SO_3$ (1:0,6) | 1 | 1 | 1—2 | 1 | 1 | 1—2 | 0 |
| 4 | 4-(2-Hydroxyäthyl)-morpholin/$H_2SO_3$ (1:0,6) | 1 | 1 | 1 | 1—2 | 1—2 | 1—2 | 0 |
| 5 | Morpholin/$H_2SO_3$ (1:0,6) | 1 | 1 | 1—2 | 2 | 1—2 | 3 | 0 |
| 6 | Diäthanolamin/$H_2SO_3$ (1:0,6) | 1 | 0—1 | 2—3 | 1 | 2 | 3 | 1 |

Um die Gebrauchsdauer der mit den erfindungsgemäßen Härtern versehenen Melamin-Tränkharzlösung zu bestimmen, wurden zu je 100 Teilen (bezogen auf den Harzanteil) des oben beschriebenen Melaminharzes jeweils 2 m Mol (bezogen auf die Säurekomponente) Härter zugesetzt. Bestimmt wurde die Zeit, nach der eine schwache bzw. starke Eintrübung der Imprägnierlösung auftrat.

(Siehe Tabelle 2 Seite 6 f.)

Tabelle 2

Gebrauchsdauer der Harzflotten mit den erfindungsgemäßen und dem bekannten Härter

| Härter | Eintrübung | |
|---|---|---|
| | schwach | stark |
| | (nach. .Tagen) | |
| Vergleich | 2 | 3 |
| Beispiel 1 | 6 | 8 |
| 2 | 16 | 21 |
| 3 | 8 | 10 |
| 4 | 6 | 8 |
| 5 | 4 | 5 |
| 6 | 5 | 6 |

Beispiel 7

Ein Melaminharz wurde, wie in Beispiel 1 beschrieben mit bekannten und einem erfindungsgemäßen Härter auf eine Trübungszeit bei 100 °C (im Reagenzglas) von etwa 270 Sekunden eingestellt. Die Imprägnierung erfolgte, wie in Beispiel 1 beschrieben.

Die Preßbedingungen betrugen hierbei jedoch: a) 30 s, b) 40 s und c) 50 s bei 190 °C mit Zulagepolster.

Bestimmt wurden Lagerfähighkeit, Härtung, Geschlossenheit (siehe Beispiel 1) sowie die Entformbarkeit vom Preßblech (Tab 3).

Tabelle 3

Prüfergebnisse der anwendungstechnischen Untersuchungen mit bekannten und einem erfindungsgemäßen Härter

| Härter | Lager-fähig-keit der Impräg-nierlsg. (Tage) | Härtung bei Verpressung | | | Geschlossen-heit bei Verpressung | | | Entformbar-keit bei Verpressung +) | | |
|---|---|---|---|---|---|---|---|---|---|---|
| | | a | b | c | a | b | c | a | b | c |
| I. (wie Beispiel 1) (Vergleichshärter) | 1,5 | 6 | 5 | 5 | 6 | 5—6 | 4—5 | — | — | — |
| II. N-Methyläthanolamin-acetat (DE—AS 16 94 333; Vergleich) | 1,5 | — | 6 | 6 | — | 6 | 3—4 | — | — | — |
| III. Di-(n-Methyläthanol-amin)-oxalat (DE—As 16 94 333; Vergleich) | 1,5 | — | 6 | 6 | — | 4 | 3—4 | — | — | — |
| 7. N-Methyläthanol-amin/H₂SO₃ 1:0,7 | 3 | 4 | 3—4 | 3—4 | 3—4 | 3—4 | 3 | + | + | + |

+) gut +
schlecht —
sehr schlecht —

# 0 000 780

## Beispiele 8 bis 10

Um die hohe Wirksamkeit der erfindungsgemäßen Härter zu unterstreichen, wurde die in Beispiel 1 beschriebene Harzlösung auf eine noch höhere Reaktivität eingestellt (Trübungszeit bei 100 °C im Reagenzglas 270 Sekunden).

Geprüft werden die Lagerfähigkeit der Harzflotte, die Härtung der Oberfläche (wie Beispiel 2) sowie das optische Aussehen (Glanz).

### Tabelle 4

Prüfergebnisse der anwendungstechnischen Untersuchungen

| Beispiel | Härter | Lager-fähig-keit der Harz-flotte (Tage) | Härtung bei Verpressung | | | optisches Aussehen der Oberfläche | | |
|---|---|---|---|---|---|---|---|---|
| | | | a | b | c | a | b | c |
| | I (wie Bspl. 1) Vergleichshärter | 1,5 | 4—5 | 4—5 | 2 | unruhig fleckig | unruhig fleckig | unruhig fleckig |
| | II Monoäthanolamin/ HCL (Vergleich) (GB—PS 697 479) | 0,8 | 6 | 6 | 6 | unruhig fleckig | unruhig fleckig | unruhig fleckig |
| | III N-Methyläthanol-amin/HCl (1:0,9) (Vergleich) | 1,5 | 5 | 4 | 3 | unruhig fleckig | unruhig fleckig | unruhig fleckig |
| | IV N-Methyläthanol-amin/HCl (1:0,8) | 1 | 4,5 | 4,5 | 3 | unruhig fleckig | unruhig fleckig | unruhig fleckig |
| 8 | N-Methyläthanolamin/ $H_2SO_3$ (1:0,6) | 3 | 3 | 1,5 | 0,5 | etwas glänzend | glänzend | glänzend |
| 9 | N-Methyläthanolamin/ $H_2SO_3$ (1:1) | 2,5 | 3,5 | 1,5 | 1 | etwas glänzend | glänzend | glänzend |
| 10 | Äthanolamin/$H_2SO_3$ | 2,5 | 4 | 3,5 | 3 | etwas glänzend | glänzend | glänzend |

## Patentanspruch

Verwendung einer wäßrigen Lösung eines schwefligsauren Salzes von primären, sekundären oder tertiären aliphatischen oder cycloaliphatischen Alkanolaminen bzw. des Morpholins als Härter für Aminoplastharze, insbesondere für Melamin-Formaldehydkondensate zur Herstellung von Oberflächenbeschichtungen.

## Claim

The use of an aqueous solution of a sulfite of a primary, secondary or tertiary aliphatic or cycloaliphatic alkanolamine or of morpholine as hardener for aminoplast resins, particularly for melamine-formaldehyde condensates for the production of surface coatings.

## Revendication

Utilisation d'une solution d'un sel de l'acide sulfureux de la morpholine ou d'alcanolamines cycloaliphatiques ou aliphatiques primaires, secondaires ou tertiaires, à titre de durcisseurs pour des résines aminoplastes, plus particulièrement pour des produits de condensation de mélamine-formaldéhyde, en vue de réaliser des revêtements surfaciques.